# EUROPEAN PATENT SPECIFICATION

(11) **EP 0 633 520 B1**
(45) Date of publication and mention of the grant of the patent: **20.09.2000**
(21) Application number: 94201803.7
(22) Date of filing: 23.06.1994
(51) Int. Cl.: G06F 3/16

(54) **Remote control having voice input**
Fernbedienung mit Spracheingabe
Télécommande avec commande vocale

(30) Priority: 01.07.1993 EP 93201909
(43) Date of publication of application: 11.01.1995
(73) Proprietor: Koninklijke Philips Electronics N.V., 5621 BA Eindhoven (NL)
(72) Inventor: Hörndl, Manfred, NL-5656 AA Eindhoven (NL); Gerritsen, Frans Andreas, NL-5656 AA Eindhoven (NL)
(74) Representative: Groenendaal, Antonius Wilhelmus Maria

(56) References cited:
- EP-A- 0 493 295
- EP-A- 0 538 794

## Description

### BACKGROUND OF THE INVENTION

The invention relates to a multi-media data processing device having visual display means, storage means, user interface means including voice input means and manually actuatable remote control means. Multi-media implies a selected combination among character-based text, film material, graphics, graphs, photographs, audio sequences, and possibly other elements that are suitable for producing human sensory experience. Those elements are in some way stored in storage of appropriate type, such as electrically, optically, or magnetically, and may be selectively accessed for temporary or transient display. Various fields of application have seen the need for audio annotation, and also for remote control according to what is colloquially called the zap! mechanism. A particular field is the viewing of medical pictures produced by technology such as nuclear magnetic resonance, computer tomography, infrared scanning, dynamic physiological cinema, and various others. However, many other fields of use would see similar interactivity features. A relevant publication is EP 402,911, corresponding Japanese Patent Application No. 149,628/89, priority 890614 to Hitachi, Ltd. Now, the combination of remote control means and audio inputting means puts appreciable inconvenience on the human user, in particular, when the two mechanisms are used in frequent alternation, because one hand of the operator is needed to hold the remote control unit, whereas it is also necessary to keep his head close to the microphone and vice versa: if the microphone is in a fixed position, this would detract from the remote control ergonomy, whereas, if the microphone is hand-held, this will occupy the second hand of the operator as well. By itself, it is known to have necklace and buttonhole-worn microphones, but the provision of a second, physically separate peripheral device causes much confusion and inconvenience.

The document EP-A-0 538 794 teaches a computer mouse device provided with an integrated voice input means for the purpose of attaining a user friendly voice recording function in a data processing system.

### SUMMARY TO THE INVENTION

Accordingly, amongst other things it is an object of the present invention, as defined in detail in the appended claims, to provide a physical realization of such double interactivity means as recited above, that keeps the interactivity field to the user as unobstructed as possible, and to also improve the operability features thereof from an ergonomical point of view. According to one of its aspects, the invention is characterized in that said remote control means and said voice input means are physically integrated into a hand-sized unit for through combining discrete manipulatory control signals and voice input signals effecting selecting and annotating transiently displayed pictures in said storage means. For one, if the unit is hand-sized, it may be manipulated by only one hand of the operating person. And even if it is positioned temporarily or in permanence, in a fixed way with respect to the remainder of the system, such as the visual display device, its small size would lead to only little encumbrance.

Advantageously, the hand-sized unit is wireless. This allows the operating person a particular freedom to move around. However, a wired unit in many environments would be useful as well.

Advantageously, the device allows voice-input commands through said hand-sized unit. This further broadens the scope of interactivity mechanisms.

Advantageously, the device allows with respect to the encapsulation of said hand-sized unit physical application of a smart card member.

The invention also relates to a hand-sized and manually actuatable remote control unit for use in such multi-media data processing device. In particular, the invention relates to a hand-sized and manually activatable remote control unit for use with a speech processing device having display means, storage means processing means, and said control unit having voice input means, and interfacing means for transferring voice signal representations and command signals to said speech processing device, characterized in that said unit has discrete manipulatory control means for allowing selecting and accessing displayed information on said display means, for so allowing transmission of command signals for effecting selecting, annotating and processing of stored voice information in said storage means. The overall system may have visual or audio information as its principal medium. If visual, the audio may be used to supplement explanatory or identificatory information. If the mainstay is audio the video display may provide various supporting information, such as a table of contents (TOC), audio intensity, duration of various text sections. These now can be cursored and accessed: audio intensity can be preprocessed; such as when a weak passage is automatically amplified when reproduced, as relative to other, louder passages. Sections may be suppressed. Sections may be logically joined to other sections that are physically non contiguous. Various other manipulations are by themselves known. Various advantageous aspects are recited in the dependent claims.

### BRIEF DESCRIPTION OF THE DRAWING

These and other aspects of the invention will become apparent with reference to the disclosure of preferred embodiments that are shown in particular in and by the appended Figures as follows:
Figure 1 shows a device according to the invention;
Figure 2 shows a hand-sized unit according to the invention;
Figure 3 shows an organization chart of the interactivity;
Figure 4 shows a second hand-sized unit according to the invention.

### DETAILED DESCRIPTION OF A PREFERRED EMBODIMENT

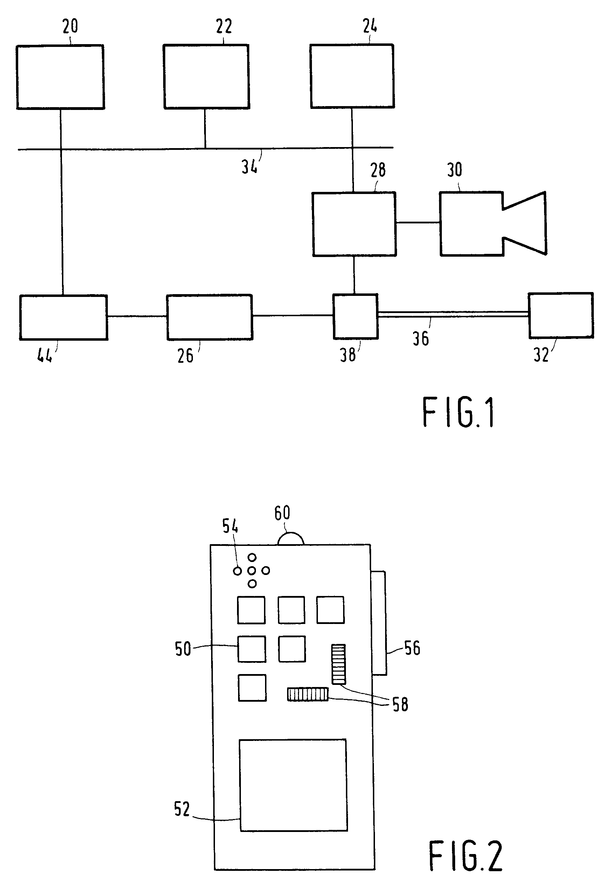

Figure 1 shows a block diagram of a device according to the invention, in the form of a comprehensive data processing device or system. By itself, the size or performance on a MIPS or Gigabyte characterization level is irrelevant. Block 20 is an information processing unit. Block 22 is an information processing storage unit with an appropriate degree of random addressability. Block 24 is a filing or background storage unit that may be based on serial storage, such a CD-ROM or magnetic disk technology, or just may be a remote data base. Item 34 is a bus of appropriate transfer capability that interconnects various other units as shown. For brevity, the bus protocol systems has not been discussed in detail, inasmuch as it could be a standard bus. Block 30 is a display unit that displays a visual frame. Block 28 is a multiwindow display processing unit, which in combination with display unit 30 forms what is colloquially termed a "workstation". The work station may have various other peripherals, such as standard keyboard, hard copy means, etcetera. Block 32 is a hand-sized unit according to the invention, and which is shown more in detail with reference to Figure 2. The unit takes up voice messages as well as manipulatory control signals, as will be explained hereinafter, and converts these to signals on infra-red or radio-wave based link 36. Block 38 is a separator device and distinguishes between voice input signals and manipulatory produced control signals. Block 26 is a voice analyzer unit that is used for digitizing received speech, recognizing whether a voice signal corresponds to an element of a limited set of commands or free-style voice input. Block 44 is a bus interface processor that formats received speech into appropriate messages, and transmits all such messages to appropriate destination stations: commands to the display or to processor 20, voice input to the processor or to storage 22. All connections shown may be either simplex, half duplex, or duplex, according to necessity and the skilled choosing of a designer.

Figure 2 shows a hand-sized unit according to the invention. Although shown as a block of about 12x5x2 centimetres, with a weight of about 150 grams, these dimensional features could be subject to change: a factor of about 2 in either dimension could be feasible, while the weight could even be much less, all this dependent on various inherent functions. The shape of the unit could be adapted to the shape of a human hand. The unit could be provided with fixing means for being fixed to the display system, such as in a reload device. In the order of decreasing relevance or priority, the input elements are the following:
- function keys 50 shown as squares may have functions like -previous-, -next-, -step enlarge-, -step decrease- (for zooming), -voice input on-, -voice input off-, and many others. Additionally, a hexadecimal keyboard, or even a miniature complete or incomplete alpha-numerical keyboard could be provided.
- pressure-sensitive graphics tablet 52 that is sensitive to thumb, pen, or both, may be used for mouse-wise control because pointing is often easier than using previous or next keys. Another feature would be graphical highlighting of a picture, such as by entering an arrow, or other sign.
- microphone 54, as shown by a set of openings in the housing to provide for transmission of the speech pressure waves for entering commands and or dictaphone information; from the outside of the housing, the microphone is not visible. The commands need to be recognized in some way that has been described for audio command input in general, whereas the dictaphone information may be analog as well as digital, the latter of course allowing improved functionality with respect to storage facilities and later retrieval.
- berth means 56 for physically entering a chip card allow for ID validation of the operator person, with respect to access rights or authentication. In fact certain persons that "own" a particular data base could be allowed to modify, whereas certain others would only be allowed to read the data. Another feature of such chip card would be personalization of functionality. The usage of a PIN-like key could be envisioned. Especially for a medical environment, the usage of a chip card may allow to enter dated signatures to a particular stored data entity, such as for insurance use. For brevity, the chip card operation is not discussed further.
- endless spin wheels in either or both coordinate axis directions could be used for various tasks, such as cursor moving, magnification change or level setting.
- infra-red LED transmitter is used for transmitting both user interface command signals and voice input. In an extended set-up the transmission could be two sided. On the other hand, a tethered solution or an embodiment with AM or FM radio waves could be feasible as well.

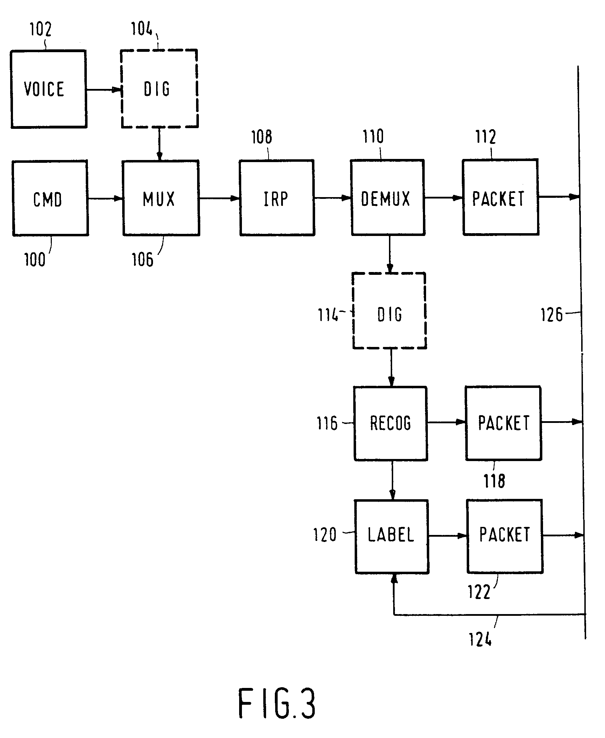

Figure 3 shows an organization chart of the interactivity. Blocks 100-108 relate in particular to the hand-sized unit. Block 100 represents the manipulatory input commands. Block 102 represents the voice input. Block 104 represents the voice digitizing within the hand-sized unit. Block 106 represents a multiplexer that may include means for prioritizing among voice and manipulatory commands. For example, actuation of either one of these would block transmission of the other for a particular short period, and as long as the former actuation continues. The means thereto could be a voice loudness level detector and a key actuation detector, not shown for brevity. Block 108 represents the infrared path which in this embodiment only transfers digital signals. Block 110 represents a demultiplexer that forwards command signals to block 112, and the voice input signals to block 114. Block 112 formats the commands by means of adding a header signal that comprises a bus address and other actions that are privy to the bus protocol in question. Block 114 as an alternative to block 104 represents the voice digitizing outside the hand-sized unit. If the infra-red voice transfer is analog, the loudness level detector signal is also transmitted and may directly control the demultiplexing in block 110. Block 116 represents a recognition process. This may on the one hand, recognize a limited set of voice-inputted commands. The recognized command is forwarded to block 118 that largely corresponds to block 112. On the other hand, block 116 may represent full speech recognition, thereby allowing storage within very small capacity. The speech so recognized is forwarded to block 120. Now, if the audio text is long, this may cause a necessity for limiting the transfer to relatively limited-length packages that constitute a logical chain. Thereto in block 120 such packages are labelled with the indication of the picture that is presently displayed on the display device 30 in Figure 2 or with an indication of the subpicture pointed at by some cursoring therein. Next, the information is forwarded to block 122 that substantially corresponds to block 112. In fact, the shown functional distinction between blocks 112, 118, need imply no physical distributivity. Arrow 124 shows the path for providing block 120 with the labelling information. Element 126 represents the bus proper.

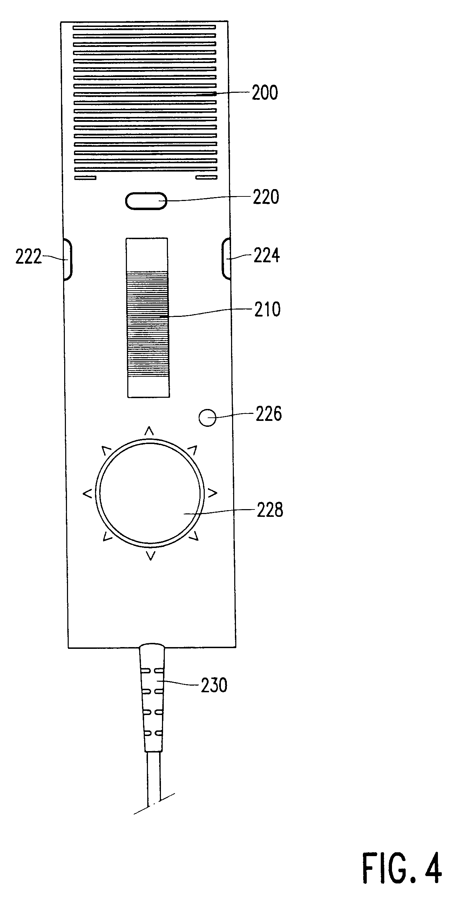

Figure 4 shows a second hand-sized unit according to the invention. The unit has standard elements as microphone 200, central control button 210 for effecting fast forward, play, stop, fast backward, secondary control buttons 220, 222, 224 for effecting recording, marking, and searching, and cable 230 for interconnection to the central station that has storage, display, and processing. The cable transports both control and audio signals.

For selectively accessing the display, the hand-sized unit has cursor driver 228, which in this case has been executed as a so-called tracker ball. Rotation in any direction controls an associated motion of the on-screen cursor. Pressing button 226 will activate a cursored item. By itself, cursor-controlled interaction is well-known in the art.

## Claims

1. A multi-media data processing device having visual display means (30), storage means (22,24), user interface means including voice input means (54) and manually actuatable remote control means (50,52), characterized in that said remote control means and said voice input means are physically integrated into a hand-sized unit (32) for, by combining discrete manipulatory control signals and voice input signals effecting selecting and annotating transiently displayed pictures in said storage means (22,24).

2. A device as claimed in Claim 1, wherein said hand-sized unit (32) is wireless.

3. A device as claimed in Claim 1, wherein said control signals are single-stroke-actuation generated.

4. A device as claimed in Claim 1, and allowing voice-input commands through said hand-sized unit (32).

5. A device as claimed in Claim 1, and allowing, with respect to the encapsulation of said hand-sized unit (32), the physical application of a chip card member.

6. A device as claimed in Claim 1, wherein said displayed pictures are medical pictures.

7. A hand-sized and manually actuatable remote control unit (32) for use in a multimedia data processing device having visual display means (30), storage means (22,24), and processing means (20), characterized in that said hand-sized unit (32) has voice input means (54) physically integrated to the unit for, by combining discrete manipulatory control signals and voice input signals allowing transmission of commands for effecting selecting and annotating transiently displayed pictures in said storage means (22,24).

8. A hand-sized unit (32) as claimed in Claim 7, wherein said unit (32) is wireless.

9. A hand-sized unit (32) as claimed in Claim 7, and allowing voice-input commands.

10. A hand-sized unit (32) as claimed in Claim 7, and allowing,with respect to its encapsulation, the physical application of a chip card member.

## Patentansprüche

1. Multimedia-Datenverarbeitungseinrichung mit visuellen Displaymitteln (30), Speichermitteln (22, 24), Benutzerschnittstellenmitteln einschließlich Spracheingabemitteln (54) und mit der Hand bedienbaren Fernbedienungsmitteln (50, 52), dadurch gekennzeichnet, dass die genannten Fernbedienungsmittel und die genannten Spracheingabemittel konkret zu einer handgroßen Einheit (32) integriert sind, um durch Kombinieren diskreter manipulatorischer Steuersignale und Spracheingabesignale flüchtig wiedergegebene Bilder in den genannten Speichermitteln (22, 24) zu realisieren, zu selektieren und zu kommentieren.

2. Einrichtung nach Anspruch 1, wobei die genannte handgroße Einheit (32) drahtlos ist.

3. Einrichtung nach Anspruch 1, wobei die genannten Steuersignale mit Einzelanschlag erzeugt sind.

4. Einrichtung nach Anspruch 1 und über die genannte handgroße Einheit (32) Spracheingabekommandos zulassend.

5. Einrichtung nach Anspruch 1 und hinsichtlich der Einkapselung der genannten handgroßen Einheit (32) die konkrete Anwendung eines Chipkartengliedes zulassend.

6. Einrichtung nach Anspruch 1, wobei die genannten Bilder medizinische Bilder sind.

7. Handgroße und mit der Hand bedienbare Fernbedienungseinheit (32) zur Verwendung in einer Multimeda-Datenverarbeitungseinrichtung mit visuellen Displaymitteln (30), Speichermitteln (22, 24) und Verarbeitungsmitteln (28), dadurch gekennzeichnet, dass die genannte handgroße Einheit (32) Spracheingabemittel (54) hat, die konkret mit der Einheit integriert sind, um durch Kombinieren von diskreten manipulatorischen Steuersignalen und Spracheingabesignalen die Übertragung von Kommandos zum Realisieren, Selektieren und Kommentieren von flüchtig wiedergegebenen Bildern in den genannten Speichermitteln (22, 24) zuzulassen.

8. Handgroße Einheit (32) nach Anspruch 7, wobei die genannte Einheit (32) drahtlos ist.

9. Handgroße Einheit (32) nach Anspruch 7 und Spracheingabekommandos zulassend.

10. Handgroße Einheit (32) nach Anspruch 7 und hinsichtlich ihrer Einkapselung die konkrete Anwendung eines Chipkartengliedes zulassend.

## Revendications

1. Dispositif de traitement de données multimédia ayant des moyens d'affichage visuel (30), des moyens de stockage (22, 24), des moyens d'interface utilisateur incorporant des moyens d'entrée vocale (54) et des moyens de télécommande manuellement actionnables (50, 52), caractérisé en ce que lesdits moyens de télécommande et lesdits moyens d'entrée vocale sont intégrés physiquement dans une unité (32) ayant la taille d'une main pour effectuer, sélectionner et annoter des images transitoirement affichées dans lesdits moyens de stockage (22, 24) par la combinaison de signaux de commande manipulateurs discrets et de signaux d'entrée vocale.

2. Dispositif selon la revendication 1, dans lequel ladite unité (32) ayant la taille d'une main est sans fil.

3. Dispositif selon la revendication 1, dans lequel lesdits signaux de commande sont générés par une seule frappe.

4. Dispositif selon la revendication 1, qui permet des commandes d'entrée vocale par l'intermédiaire de ladite unité (32) ayant la taille d'une main.

5. Dispositif selon la revendication 1, qui permet, par rapport à l'encapsulage de ladite unité (32) ayant la taille d'une main, l'application physique d'un membre de carte à puce.

6. Dispositif selon la revendication 1, dans lequel lesdites images affichées sont des images médicales.

7. Unité de télécommande (32) ayant la taille d'une main et étant manuellement actionnable pour être utilisée dans un dispositif de traitement de données multimédia ayant des moyens d'affichage visuel (30), des moyens de stockage (22, 24) et des moyens de traitement (20), caractérisée en ce que ladite unité (32) ayant la taille d'une main présente des moyens d'entrée vocale (54) étant physiquement intégrés dans l'unité pour effectuer, sélectionner et annoter des images transitoirement affichées dans lesdits moyens de stockage (22, 24) par la combinaison de signaux de commande manipulateurs discrets et de signaux d'entrée vocale permettant la transmission de commandes.

8. Unité (32) ayant la taille d'une main selon la revendication 7, dans laquelle ladite unité (32) est sans fil.

9. Unité (32) ayant la taille d'une main selon la revendication 7, qui permet des commandes d'entrée vocale.

10. Unité (32) ayant la taille d'une main selon la revendication 7, qui permet, par rapport à son encapsulage
